# EUROPEAN PATENT APPLICATION

(11) **EP 3 505 438 A1**
(43) Date of publication of application: **03.07.2019**
(21) Application number: 18175446.6
(22) Date of filing: 01.06.2018
(51) Int. Cl.: B63B 1/40, B63H 5/14, B63H 5/15

(54) **MINIMAL BOW WAVE SYSTEM**

(30) Priority: 27.12.2017 SG 10201710820
(71) Applicant: Chua, Sui Kwang, 85010 Segamat, Johor (MY)
(72) Inventor: Chua, Sui Kwang, 85010 Segamat, Johor (MY)
(74) Representative: Gulde & Partner

(57) **Abstract**

The present invention provides a method to significantly reduce the amount of water that the ship has to displace in order to move forward. This can be achieved by continuously sucking in very large volumes of water from the high pressure zone immediately ahead of the ship's bow and transferring it to the low pressure zone behind the ship's stern. The result will be much reduced formation of bow waves, less hull turbulence, less formation of vortices, all of which means less energy-sapping drag. There will also be increased propeller efficiency. All the above will together result in considerable fuel savings.

## Description

### FIELD OF THE INVENTION

The present invention relates to a minimal bow wave system retrofitted to existing ships or in-built in new ships.

### BACKGROUND TO THE INVENTION

It is the aim of this invention to seek ways to reduce the formation of large bow waves which drain energy away from the ship, and to reduce fuel consumption as well as pollution.

Since the price of crude oil breached the psychological barrier of U.S. 50.00 /bbl. a few years ago, ship owners have scrambled to find ways to reduce the costs of ship operation.

Most of them opted for 'economies of scale' and the largest ships have become so huge that the engines necessary to power them have exceeded 100,000 hp. and can burn 16 tons of fossil fuel per hour when operating at maximum power. These ships are economical to operate if fully loaded but become counter-productive if they are only partially loaded.

Another way is to build ships with 'bulbous bows'. They achieve significant fuel savings but are 'speed specific' and 'load specific'

Other ship owners have resorted to 'slow steaming' but this tactic is fraught with negative legal implications.

A hull with a large draft and a blunt bow has to push the water away very quickly in order to pass through the water. This high acceleration of water when it is being displaced requires large amounts of energy.

A zone of very high pressure is created ahead of the bow to which is added the hydrostatic pressure of the 'swell' of water ahead of the bow before the 'swell' breaks to fall away to port and to starboard as bow waves. The bow waves in turn break down into divergent waves which eventually dissipate and into convergent waves which collide with the ship's hull to create hull turbulence which drags on the hull at the expense of the ship's kinetic energy.

A zone of low pressure is simultaneously created at the stern when the hull moves forward, vacating the space occupied by it in the water.

The stern wave rushes into this low pressure zone causing turbulence behind the stern and also in the "pre-swirl' area ahead of the propeller. This reduces propeller efficiency and also carries the risk of cavitation.

To date, the only invention that has addressed some of the above-mentioned problems is the "Bulbous Bow". This has been adopted by many large vessels and under optimum conditions, fuel savings of up to 12% have been achieved. However the design is 'speed specific' and 'load specific'. At slower speeds and with reduced load (draft), the benefits are minimal. Crew members are also worried that the large and heavy bulbous bow will reduce the vessel's ability to ride the waves in heavy weather and the risk of foundering is ever present, especially when the ship is fully loaded.

### SUMMARY OF THE INVENTION

The structure consists of a large cargo ship purpose built or modified, with 4 or more large tubular conduits built into the double hull area and extending from the bow to the stern. The conduits or trunking may also be of oval or square section or a combination thereof, to suit and to make the best use of available space.

A high capacity 'large volume, low pressure' axial-flow pump (A-F pump) is fitted into each conduit. The pumps may be installed in the empty space in front of the forward cargo hold or in any other convenient position. All the A-F pumps are designed to continuously suck in very large volumes of water from the zone immediately in front of the bow and push the water out at the stern. This will create a low-pressure zone for the ship to sail into and there will no longer be any need for the ship to 'force' its way through a high pressure wall of water. Bow waves will thus be minimised.

The intake feed into the pumps is pressurised by the hydrostatic head of the water above them. The hydrostatic head can be as much as 20 meters in the largest ships when they are loaded to the plimsoll line.

The 2 conduits running alongside the midline of the ship will discharge pressurised water directly into the propeller shroud so that the pre-swirl area will have smooth-flowing pressurised water to provide a positive feed to the propeller with reduced risk of cavitation. The propeller will be able to get a "good solid bite' of water for better efficiency.

The propeller is provided with a bell-mouthed shroud to channel water into it, and also to contain and channel all the water that is forcefully thrust back by the propeller. No water is allowed to escape sideways-thus all the water that has received energy from the propeller is discharged forcefully through the nozzle of the shroud in the form of a large jet, to propel the ship forward.

If the ship is fitted with 6 axial-flow conduits, the intermediate conduits no. 2 and no.5 will discharge large volumes of water into the low-pressure zone immediately behind the stern. This will serve to reduce the 'sucking effect' of the low-pressure water on the ship's hull as the hull moves forward, vacating the space occupied by it in the water.

Conduits no.3 and 4 will discharge into the propeller shroud to give the propeller maximum 'bite' and maintain maximum propeller efficiency.

If the ship is fitted with 8 axial-flow conduits, then the intermediate conduits nos.2, 3, 6 and 7 will discharge water into the low-pressure zone behind the stern - serving to reduce the sucking effect and low pressure caused by the ship moving forward.

Bulk carrier ships can be very wide, with a beam measuring up to 30 meters. In such cases, in each of the 8 positions designated for the installation of an A-F pump, each position may be utilized for the fitting of a set of 2 or more A-F pumps mounted in parallel. Each set of A-F pumps may be arranged to discharge into a common manifold, thus obviating the need to have dozens of pipe conduits running down the length of the ship. This will save weight and costs.

Large ships have auxiliary engines to supply power for lifting equipment, ballast adjustments, setting and retrieving anchors etc. These functions are idling when the ship is underway, so the power can be used for the A-F pumps. If necessary, an additional auxiliary engine can be fitted.

Due to viscosity, the flow velocity of the boundary layer of water slows down and in regions of high hull curvature (especially in the aft-body zone), will lead to flow separation and vortex formation. These factors will result in the ship slowing down, due to drag.

The outermost axial-flow conduits with nozzles which are flattened on both sides will discharge high pressure water jets straight back from the aft-body area. A section of the nozzle will look like a vertical elongated box and the discharged water will act like a moving wall to block turbulence from the stern wake and to block aft-body bilge vortex formation, thereby further reducing energy-depleting drag.

The increased efficiency in propeller operation, together with reduced energy losses achieved through reduction of bow wave formation, reduced hull drag, reduced vortex formation, reduced cavitation, reduced prop slip and most importantly reduced pressure in the zone in front of the ship's bow-will result in a ship that will be able to maintain sailing speed with improved fuel consumption, because all the reduced energy-losses will translate into smaller throttle settings. Slow steaming will no longer be an option.

The minimal bow wave system can be used in 'new build ships' and can also be retrofitted to existing ships, thus saving costs, but more importantly, will save a lot of time because the rate of global warming is much faster than previous estimated.

### BRIEF DESCRIPTION OF THE DRAWINGS

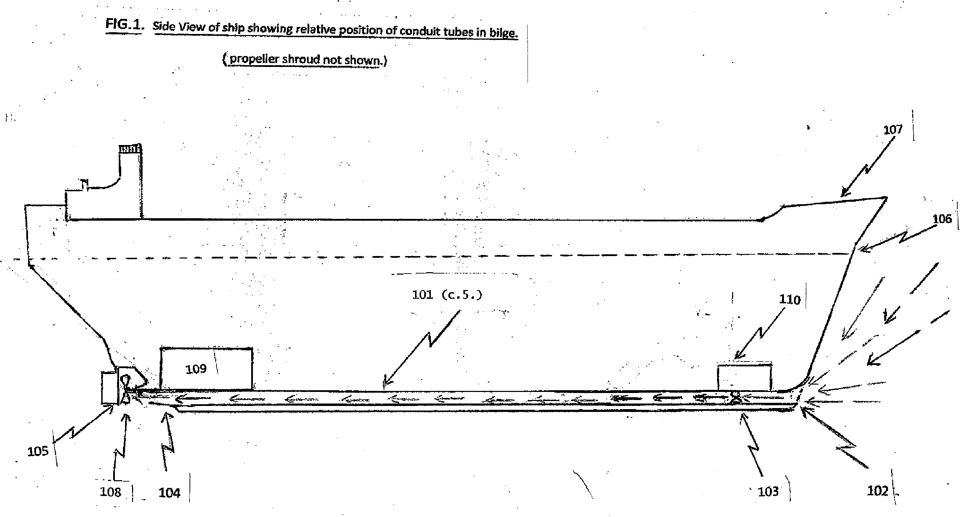

Figure 1 is a side view of the ship showing the relative position of the conduit tubes in the bilge area of the ship. (the propeller shroud is not shown). 101 shows the conduit tubes extending from the ship's bow to the stern. 102 shows the funnel-shaped mouth of the conduit tube with the mouth angled more towards the surface of the sea. 103 shows the A-F pump positioned in the conduit tube a short distance in from the mouth of the conduit tube. The electrically driven A-F Pumps may be placed in the 'crumple zone' in the bow, ahead of the forward cargo hold. 104 shows the tapered outlet pipe of the conduit tube at the ship's stern, at propeller level. 105 shows the ship's rudder. 106 shows the water-level line when the ship is fully loaded-the plimsoll line. 107 shows the ship's prow. 108 shows the ship's propeller. 109 shows the ship's main engine. 110 shows the auxiliary generator set (if needed) to provide power for the axial flow pumps.

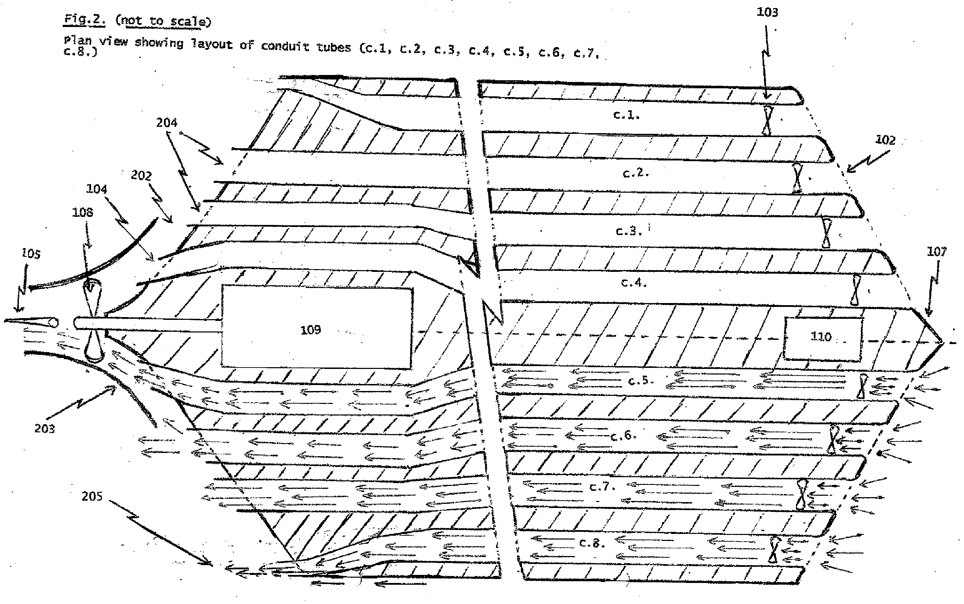

Figure 2 is a horizontal section of the ship at propeller-level showing the layout of 8 conduit tubes extending from the bow to the stern of the ship. 108 shows the single ship's propeller. 202 shows the annular gap between the mouth of the shroud and the ship's hull. 203 shows the propeller shroud. 104 shows the discharge end of the tubular conduit angled in towards the propeller. (this applies only to the 2 conduit tubes alongside the ship's midline). 204 shows the 4 intermediate conduit tubes which discharge high-pressure water straight backwards. 205 shows the outermost conduit tubes (c.1, c.8.) where the discharge nozzles are tapered to produce powerful water jets which will block the formation of aft-body vortices.

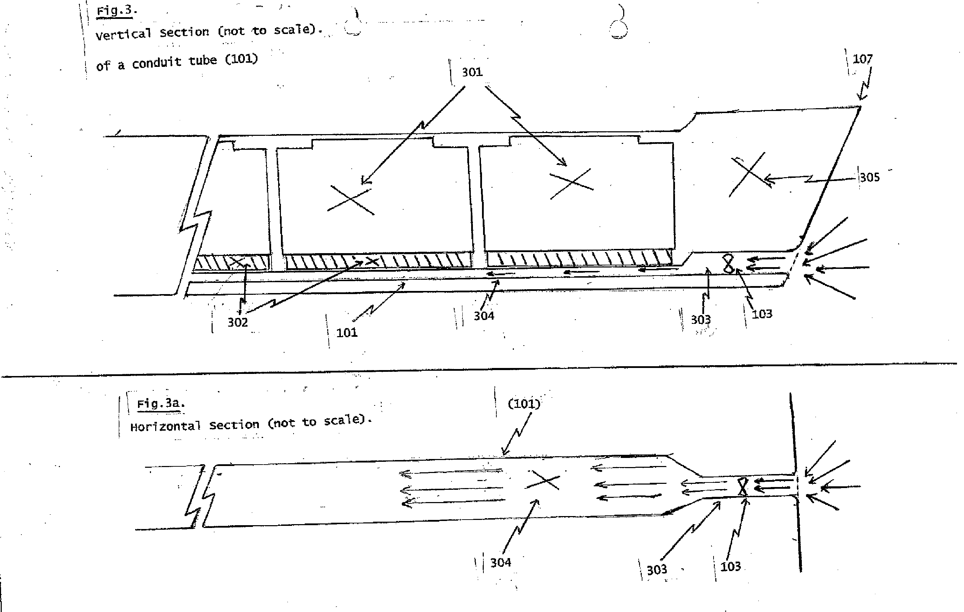

Figure 3 is a vertical section through the bow of a bulk carrier showing a conduit tube (101). There may be 4 or more conduit tubes, depending on the width of the ship.
Figure 3a is a horizontal section through a conduit tube (101). At a short distance after the axial flow pump, the conduit tube (101) becomes a flat box-shaped trunking (301) and retains this shape all the way to the stern of the ship. The flat shape of the trunking is designed to reduce the amount of vertical space lost through the installation of the conduit trunking.

### DETAILED DESCRIPTION OF THE INVENTION

Referring first to Figure 1, 4> (or up to 8 if the ship is very wide) conduit tubes (101) are built into the bilge area of the large cargo ship. (only 1 conduit tube is shown this side view.) The opening (102) of the conduit tube at the bow is funnel-shaped and is angled upwards. A powerful axial flow pump (103) is built into the conduit tube (101) a short way in from the mouth of the tube. When the axial flow pumps (103) are running, large volumes of water are sucked into the conduit tubes (101) through the openings (102) at the bow. This creates a low pressure zone at bilge level and water will rush in, aided by hydrostatic and atmospheric pressure (if the draft is 20 meters, the hydrostatic pressure will be 28.1 psi. When the atmospheric pressure of 14.7 psi. is added on, the total pressure will be 42.8 psi.)

Thus, very large volumes of water will be continuously sucked in from the zone ahead of the ship's bow and transferred (displaced) to the zone behind the stern.

The low pressure zone that is thus being continuously created ahead of the ship will allow the ship to easily sail forward without having to expend large amounts of energy to push water out of its way. Bow waves will be minimal and hull drag will also be minimal.

Figure 2 shows a horizontal section of the ship at propeller level. (not to scale).The ship's single large propeller (108) is shown enclosed by a bell-mouthed shroud (203). There is an annular gap (202) at the forward (intake) end. The 2 conduit tubes (101-c.4, c.5) alongside the ship's mid-line are tapered at the outlet end (104). The flow of the discharged water is directed into the shroud (203) and guided by the shroud to feed the propeller (108).

The fast-flowing jets of water from the outlet pipes (104) will draw in water from the aft-body zone into the shroud through the annular gap (202). This will maximise the flow of water and smoothen the flow of water into the propeller (108) to increase propeller efficiency, at the same time reducing the risk of cavitation.

The water then absorbs energy from the propeller (108) and the energy-laden water will propel the ship forward. The shroud (203) will prevent any energy-laden water from being thrown out radially and wasted.

As the ship moves forward, it will leave behind it a momentary void into which water will rush in. This low pressure zone behind the stern has very turbulent water. The large ship's propeller (108) will have to suck in water which is frothy and very turbulent. Any froth or air in the water will have to be compressed out before the water can be fully energised and deliver thrust. There is also risk of cavitation.

The intermediate conduit tubes (204) will discharge large volumes of water into the low pressure zone behind the ship's stern and ensure that the propeller will get 'a good solid bite' of water for maximum propeller efficiency.

There is also provision for additional water to be drawn in (if needed) through the annular gap (202) of the propeller shroud (203).

The outermost conduit tubes (c.1, c.8.) are tapered to provide strong jets of water (205), jetting straight back to block vortex formation in the aft-body zone. This will also help to reduce drag.

The ship's auxiliary engines will be under-utilised when the ship is underway and can be used to power the A-F pumps. An additional auxiliary engine can be provided if necessary.

Figure 3 shows a vertical section of a typical large cargo ship (not to scale). 301 are the cargo holds. 302 are the ballast tanks below the cargo holds (301). 303 is the forward round-sectioned part of the conduit tube. 103 is the axial flow pump located in the round-sectioned part of the conduit tube. 304 is the flat oblong-sectioned part of the conduit tube passing through below the ballast tanks (302), all the way to the stern. The conduit tubes can also be placed in the space between the double bottoms. The flattened profile of the conduit tubes will take up less vertical space. 305 is the empty space (crumple-zone) immediately behind the prow (107) between the prow (107) and the forward cargo hold (301). The axial flow pumps (103) and the auxiliary generator (110- if needed) can be conveniently located in this space.

Figure 3a shows 103 is the axial flow pump located in the conduit tube (round-sectioned). 303 is the rounded-section conduit tube which extends from the intake to a short distance after the axial flow pump (103). 304 is the flattened, oblong-sectioned part of the conduit tube extending all the way back to the ship's stern. The flattened profile is designed to save vertical space.

## Claims

1. A structure placed on a body of water such as a sea or a river channel, comprising a bulk carrier ship, which may be new-built or which maybe an existing ship modified to serve the purpose of achieving fuel economy, by reducing the formation of bow waves, reducing hull drag and reducing cavitation and maximising propeller efficiency.

2. A structure according to claim 1, whereby the modifications comprise equipping the bulk carrier ship with multiple conduit tubes built into the space between the double bottoms of the ship, extending from the bow to the stern, to serve the purpose of continuously transferring large volumes of water from the high pressure zone in front of the bow to the low pressure zone behind the stern of the ship. This action will result in the ship being able to move forward into a relatively lower pressure zone, meeting with considerably less resistance and thus the formation of bow waves will be minimised.

3. A method according to claim 1 and claim 2, wherein a large volume, low pressure axial flow pump is fitted into each conduit tube a short way in from the intake end of each conduit tube. The axial flow pumps will be driven by electrical motors.

4. A method according to claims 1, 2 and 3 wherein the axial flow pumps and motors are installed in the empty space immediately behind the bow, between the bow of the ship and the forward cargo hold.

5. A method according to claims 1,2,3 and 4 whereby the axial flow pumps will suck in large volumes of water continuously from the high pressure zone in front of the ship's bow and transfer the water through the conduit tubes, and discharge the water into the low pressure zone behind the ship's stern.

6. A method according to any one of claims 1, 2, 3, 4 and 5, whereby the ship will be moving forward into a zone of relatively lower pressure and meeting reduced resistance from the water because a large volume of water has already been 'displaced' and will continue to be 'displaced' from the zone immediately ahead of the ship by the action of the multiple axial flow pumps which act to transfer the water through the multiple conduit tubes and to discharge the water into the low pressure zone behind the ship's stern. In fact, before the ship sets sail, the axial flow pumps are first activated in anticipation and create a low pressure zone for the ship to sail into easily, using considerably less power than other ships which have not been similarly modified.

7. A method according to anyone of claims 1, 2, 3, 5, 6 wherein a propeller shroud is provided and is mounted to the lower part of the ship's stern to surround the ship's propeller. The shroud will guide and channel the water to feed the propeller. When the propeller draws in water and pushes it backwards, energy is imparted to the water, and some of it, due to centrifugal force, will try to escape sideways. The shroud will prevent this and will ensure that all the energy-laden water will exit the nozzle of the shroud in the form of a huge water jet and contribute additional thrust to help propel the ship.

8. A method according to anyone of claims 1-7, wherein the 2 conduit tubes alongside the mid-line of the ship are so placed that they will discharge water directly into the propeller shroud, into the pre-swirl area of the propeller. This additional supply of pressurised water will ensure that the propeller will get all the water it needs in order to function with maximum efficiency, and there will be less risk of cavitation. The annular gap at the mouth of the shroud will allow additional water to be drawn in automatically if necessary.

9. When the ship moves forward, a momentary vacuum is created in the space vacated by the ship. Water will rush in from all directions, creating turbulence. At the same time, the low pressure zone will exert a sucking force on the ship's hull to prevent it from moving away. All this drag will have to be overcome by the power of the engine. A method wherein according to anyone of claims 1-6, the intermediate conduit tubes will continuosly discharge large volumes of pressurised-water into the low pressure zone behind the ship's stern to counter the negative effects of the low pressure as well as contribute a small amount of thrust.

10. A method according to anyone of claims 1-6, wherein the outermost conduit tubes, one on each side of the ship, are designed to deliver a 'moving wall of water' jetted straight backwards from the aft-body of the ship, to block the formation of aft-body bilge-vortices. This will serve to reduce drag and to conserve the ship's energy.

11. A method according to anyone of claims 1-6 whereby the formation of bow waves is minimised such that, when a bulk carrier is fully laden and down to the plimsoll line, as it sails 'low down' in the water, the risk of large and dangerous bow waves crashing down onto the deck and forward hatch during bad weather is minimised. This will obviate the possibility of forward hatch failure due to the weight of many tons of sea water crashing down in succession onto the forward hatch.
